# EUROPEAN PATENT APPLICATION

(11) **EP 4 249 689 A1**
(43) Date of publication of application: **27.09.2023**
(21) Application number: 22176084.6
(22) Date of filing: 30.05.2022
(51) Int. Cl.: E03C 1/04

(54) **SHOWER ASSEMBLY**

(30) Priority: 22.03.2022 CN 202210304717
(71) Applicant: Purity (Xiamen) Sanitary Ware Co., Ltd., Xiamen, Fujian 361100 (CN)
(72) Inventor: WU, James, 434 Taichung City (TW); WU, Alex, 434 Taichung City (TW); YANG, Ce-Wen, Xiamen City (CN)
(74) Representative: Melchior, Robin

(57) **Abstract**

A shower assembly (100) includes a sprayhead (10) and a shower column (20). The sprayhead (10) has nozzles (122) on a front side. A top end of the sprayhead (10) is disposed with a quick-release seat (14). The quick-release seat (14) has a hole, wherein a section of the hole is movably disposed with a plug (16). After the plug (16) is moved out, the plug hole section (142) is unblocked. The shower column (20) has a quick-release connector (22) that is adapted to be detachably engaged with the quick-release seat (14). A pressing structure (28) in the quick-release connector (22) pushs the plug (16) to an open position, so that the sprayhead (10) communicates with the shower column (20), thereby allowing the shower column (20) and the sprayhead (10) to utilize the same inlet flow pathway (A). A sanitary device, which is an integral assembly of the shower column (20) and the sprayhead (10), is provided for facilitating the convenience of use.

## Description

### BACKGROUND

### Technical Field

The present invention relates generally to a sanitary device, and more particularly to a sprayhead assembly including the sprayhead and the shower columns.

### Description of Related Art

Most of the conventional sprayheads is fixed to the wall by using a fixing seat. Alternatively, the shower column could be disposed with a lifting seat for adjusting the height, and the fixing seat for fixing the spray head is disposed on the lifting seat.

The conventional sanitary device including the sprayhead and the shower column does not have a common flow pathway that communicates the sprayhead and the shower column. The conventional sanitary device includes two independent flow pathways that are connected to the sprayhead and the shower column, respectively, so that each of the sprayhead and the shower column provides a water spray function. Therefore, the conventional sanitary device has problems that the connection between the sprayhead and the shower column does not appear integral, and the two independent flow pathways for providing water increase the manufacturing cost.

### SUMMARY OF THE INVENTION

In view of the above, the primary objective of the present invention is to provide a sanitary installation includes a sprayhead and a shower column, wherein the shower column is detachably engaged with the sprayhead, and the shower column and the sprayhead share the same flow pathway. When the shower column is disengaged from the sprayhead, the sprayhead could prevent the water flow from flowing out through a connecting portion that is adapted to connected to the shower column. Therefore, the sprayhead assembly provided to the user appears smooth and integral and has two different output functions (namely outputting by the sprayhead and the shower column). Besides, the manufacturing cost of the sprayhead assembly could be reduced.

The present invention provides a sprayhead assembly including a sprayhead and a shower column. The sprayhead includes a tube body, a quick-release seat, and a plug, wherein an interior of the sprayhead forms a flow pathway. The flow pathway has an inlet. A top end of the tube body has a mounted opening. The tube body is disposed with a plurality of nozzles that communicates with the flow pathway. The quick-release seat is embedded into the mounted opening, wherein an inserted hole is formed in the middle of the quick-release seat, and the inserted hole has a plug hole section. A portion of the plug passes through the plug hole section. When the plug is pushed, the plug is returnably moved from the first position to the second position. When the plug is located at the first position, the plug hole section is blocked. When the plug is located at the second position, the plug hole section is unblocked.

The shower column includes a quick-release connector, a connecting tube, and a top spray head, wherein the quick-release connector is connected to a bottom end of the connecting tube, and the top spray head is connected to a top end of the connecting tube. The quick-release connector has a guiding hole. When the quick-release connector is detachably engaged with the quick-release seat, the plug is pushed and moved to the second position to allow the flow pathway, the plug hole section, and the guiding hole to communicate with each other's.

With such design, after the sprayhead is engaged with the shower column, the entire sprayhead assembly looks integral and aesthetic, and the shower column and the sprayhead could be used as one. By using the plug and the quick-release connector, when the shower column is engaged with the sprayhead, the shower column and the sprayhead could be communicated via the same flow pathway for providing water. It is not necessary to add another flow pathway for providing water to the shower column, thereby reducing the manufacturing cost. When the shower column is disengaged from the sprayhead, the plug could immediately block the plug hole section of the inserted hole of the quick-release seat, so that the water in the sprayhead does not leak from the inserted hole of the quick-release seat. Therefore, the user could use the sprayhead individually to take a shower as well, which is convenient for the user.

### BRIEF DESCRIPTION OF THE DRAWINGS

The present invention will be best understood by referring to the following detailed description of some illustrative embodiments in conjunction with the accompanying drawings, in which
FIG. 1 is a perspective view of the sprayhead assembly of an embodiment according to the present invention;
FIG. 2 is an exploded partial view of the sprayhead assembly of the embodiment according to the present invention;
FIG. 3 is similar to FIG. 2, showing the sprayhead assembly from another perspective;
FIG. 4 is an exploded view of the quick-release seat, the plug, and the quick-release connector of the embodiment according to the present invention;
FIG. 5 is a sectional view taken along the 5-5 line in FIG. 1;
FIG. 6 is an enlarged partial view of a marked region 6 in FIG. 5;
FIG. 7 is a top view of the sprayhead of the sprayhead assembly of the embodiment according to the present invention;
FIG. 8 is a sectional view taken along the 8-8 line in FIG. 7; and
FIG. 9A to FIG. 9C are schematic views of the sprayhead assembly of the embodiment according to the present invention, showing the continuous actions during the assembly operation seen from the perspective of FIG. 8.

### DETAILED DESCRIPTION OF THE INVENTION

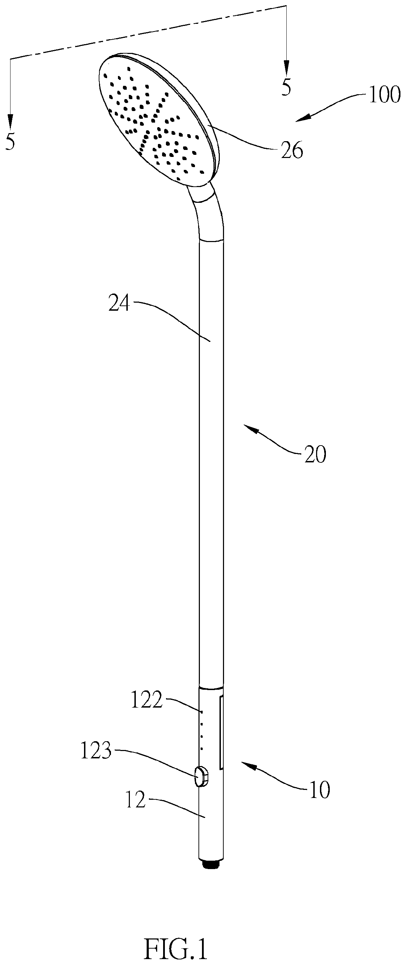

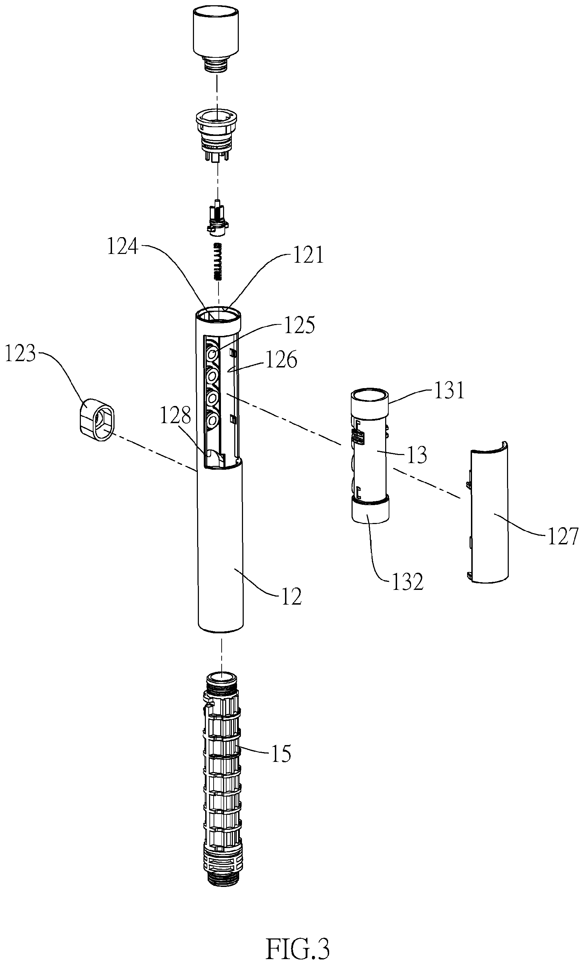

As illustrated in FIG. 1 to FIG. 6, a sprayhead assembly 100 of an embodiment according to the present invention includes a sprayhead 10 and a shower column 20 that is detachably connected to the sprayhead 10. Additionally, a shut-off structure is disposed between the sprayhead 10 and the shower column 20 to cut off a water flow when the shower column 20 is detached from the sprayhead 10, so that the sprayhead 10 could still be used without the shower column 20 by a user to take a shower. In other words, a function of the sprayhead 10 does not affect by the disassembly of the shower column 20.

The sprayhead 10 includes a tube body 12, a quick-release seat 14, and a plug 16. An interior of the sprayhead 10 forms a flow pathway A. A bottom end of the flow pathway A has an inlet A1. A top end of the tube body 12 has a mounted opening 121. A front side of the tube body 12 has a plurality of nozzles 122 and a control button 123. Each of the nozzles 122 is communicates with the flow pathway A. The control button 123 controls a water output through each of the nozzles 122. The quick-release seat 14 is embedded into the mounted opening 121 by adhering or welding. The quick-release seat 14 has an inserted hole 141 inside. A bottom end of the inserted hole 141 has a plug hole section 142 for receiving the plug 16, wherein a diameter of the plug hole section 142 is smaller than a diameter of the inserted hole 14, and an end of the plug hole section 142 forms an opening on the center of a bottom surface of the quick-release seat 14.

A portion of the plug 16 is inserted into the plug hole section 142 of the inserted hole 141. The plug 16 is movable along a wall of the plug hole section 142 to move between a first position and a second position, wherein the first position and the second position are located at different heights. A support 18 is disposed within the flow pathway A and has a spring seat 181. The spring seat 181 is disposed with a spring 182, wherein the spring 182 is adapted to urge the plug 16 to move toward the first position. Thus, after the plug 16 is pushed, the plug 16 is returnably moved from the first position to the second position, the plug 16. When the plug 16 is located at the first position, the plug hole section 142 is blocked. When the plug 16 is located at the second position, the plug hole section 142 is unblocked (opened). When the plug 16 is not pressed by an external force, the plug 16 remains at the first position to keep the plug hole section 142 being blocked.

The shower column 20 includes a quick-release connector 22, a connecting tube 24, and a top spray head 26. The quick-release connector 22 is connected to a bottom end of the connecting tube 24 by adhering or welding. The top spray head 26 is connected and fixed to a top end of the connecting tube 24. The quick-release connector 22 has a guiding hole 221. When the quick-release connector 22 is detachably engaged with the quick-release seat 14, a portion of the quick-release connector 22 is inserted into the inserted hole 141 of the quick-release seat 14. In an embodiment, an outer surface of the quick-release connector 22 has an external thread, and the inner surface of the quick-release seat 14 has an internal thread, so that the quick-release connector 22 is detachably engaged with the quick-release seat 14 by screwing. Alternatively, in another embodiment, the outer surface of the quick-release connector 22 has a protrusion, and the inner surface of the quick-release seat 14 has a slot, so that the quick-release connector 22 is detachably engaged with the quick-release seat 14 by interlocking the protrusion and the slot.

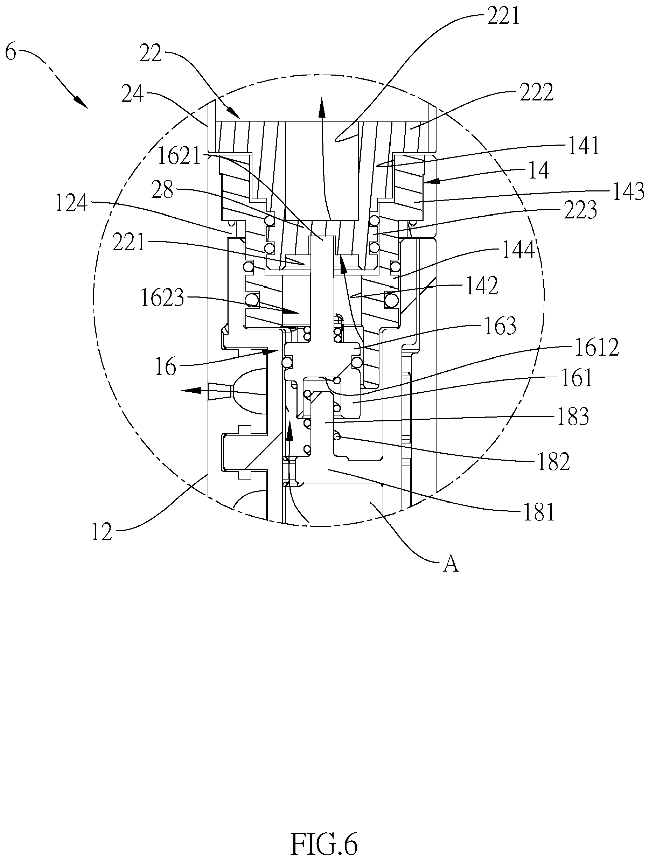

An inner wall of the guiding hole 221 of the quick-release connector 22 is connected to a pressing structure 28. As illustrated in FIG. 6, when the quick-release connector 22 is detachably engaged with the quick-release seat 14 to allow the portion of the quick-release connector 22 is inserted into the inserted hole 141 of the quick-release seat 14, the pressing structure 28 pushes the plug 16 at a top end to move to the second position. At this time, the flow pathway A communicates with the guiding hole 221 having the plug hole section 142, so that a water flow flowing through the flow pathway A could enter into the connecting tube 24 of the shower column 20 and then be outputted through the top spray head 26.

When the shower column 20 of the abovementioned embodiment is used, the shower column 20 is fixed to a wall of a bathroom via a holder mounted on the wall, and the inlet A1 of the shower column 20 is connected to a water source. The flow pathway A is utilized by both the shower column 20 and the sprayhead 10, so that the shower column 20 does not need to be disposed with an additional input flow pathway for the shower column 20. As illustrated in FIG. 1, FIG. 5, and FIG. 6, when the user switches the control button 123 to allow the water in the flow pathway A could flow to the nozzles 122 of the top spray head 26, the nozzles 122 of the sprayhead 10 and the top spray head 26 of the shower column 20 output the water. When the shower column 20 is disengaged from the sprayhead 10, the spring 182 urges the plug 16 to return to the first position, thereby blocking the plug hole section 142 and preventing the water flow in the flow pathway A from flowing through the quick-release seat 14. When a top end of the sprayhead 10 is sealed, the user could still operate the control button 123 to allow the water flow through out the nozzles 122 of the sprayhead 10.

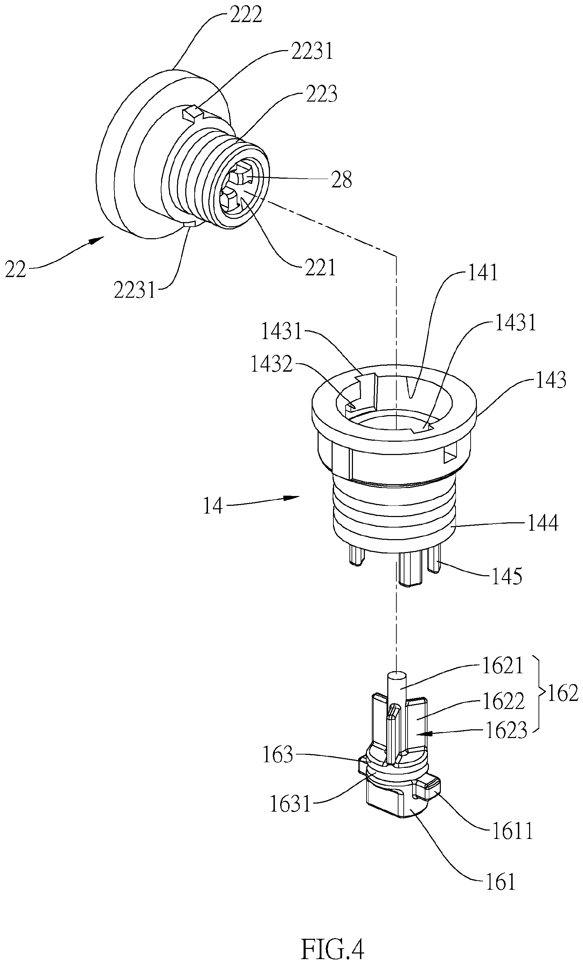

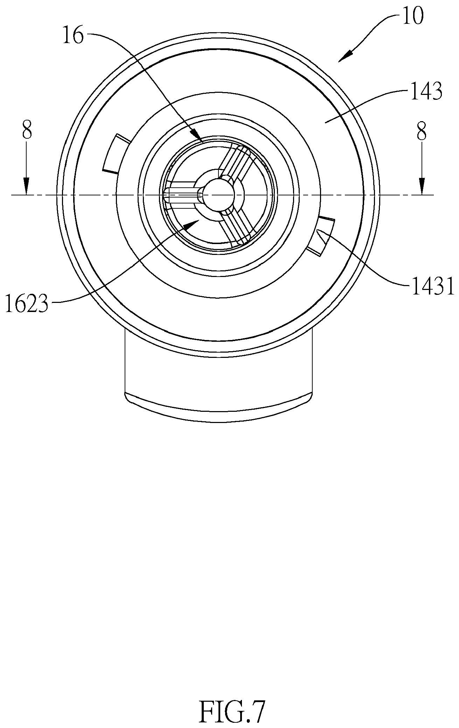

The following describes the engaging structure between the sprayhead 10 and the shower column 20 of the above-mentioned embodiment in detail. As illustrated in FIG. 4 to FIG. 8, a portion of an inner surface of the tube body 12 that is adjacent to the mounted opening 121 has an annular projection 124 in a ring shape.

The quick-release seat 14, which is a vertical tube, has a lower disc portion 143 at a top side and a tube portion 144 at a bottom side. An outer diameter of the lower disc portion 143 is greater than an outer diameter of the tube portion 144. The tube portion 144 passes through the annular projection 124. A bottom edge of the lower disc portion 143 abuts against the annular projection 124 to position. The inserted hole 141 is a stepped hole. Except for the plug hole section 142 for receiving the plug 16, the inserted hole 141 has a top section and a middle section, wherein the middle section is located between the top section and the plug hole section 142 for receiving the plug 16. The top section of the inserted hole 141 communicates outside, and a diameter of the top section is greater than a diameter of the middle section. A top portion of an inner surface of the lower disc portion 143 has a plurality of first grooves 1431. In the current embodiment, the inner surface of the lower disc portion 143 has two first grooves 1431 which are opposite to each other, and each of the first grooves 1431 extends in a direction parallel to an axial direction of the quick-release seat 14. Each of the first grooves 1431 has an opening on a top surface of the lower disc portion 143, and an end of each of the first grooves 1431, which is away from the top surface of the lower disc portion 143, is connected to a second groove 1432. The second grooves 1432 extend along a circumferential direction of the lower disc portion 143, wherein each of the second grooves 1432 extends in the same circumferential direction of the lower disc portion 143 from one of the first grooves1431. A bottom surface of the tube portion 44 has a plurality of guiding rods 145 extending downward. In an embodiment, the plurality of guiding rods 145 includes two pairs of guiding rods 145 that are opposite to each other.

The plug 16 includes a bottom section 161, a top section 162, and a plugging portion 163. The plugging portion 163 is connected between the bottom section 161 and the top section 162. Two projecting lugs 1611 protrude in a radial direction on a circumference of the bottom section 161, wherein the two projecting lugs 1611 extend in two opposite directions. Each of the two projecting lugs 1611 is inserted into a space between adjacent two of the guiding rods 145, so that the two projecting lugs 1611 are guided and restricted by the guiding rods 145, thereby allowing the plug 16 to smoothly moved along the axial direction without rotating. A bottom surface of the bottom section 161 has a plug recess 1612, wherein a top end of the spring 182 is inserted into and urges against the plug recess 1612.

A center of the top section 162 of the plug 16 is disposed with a supporting rod 1621. A center of the pressing structure 28 abuts against a top end of the supporting rod 1621. A circumference of the supporting rod 1621 is connected to a plurality of blades 1622 that are arranged around the supporting rod 1621 and extend radially. A height of a top edge of each of the blades 1622 is lower than a height of the top end of the supporting rod 1621. A bottom edge of each of the blades 1622 is connected to the plugging portion 163. A plurality of guiding grooves 1623 is formed between adjacent two of the blades 1622, that is to say, any adjacent two of the guiding grooves 1623 are separated by one of the blades 1622. Each of the guiding grooves 1623 extends in a direction parallel to an axis of the plug 16.

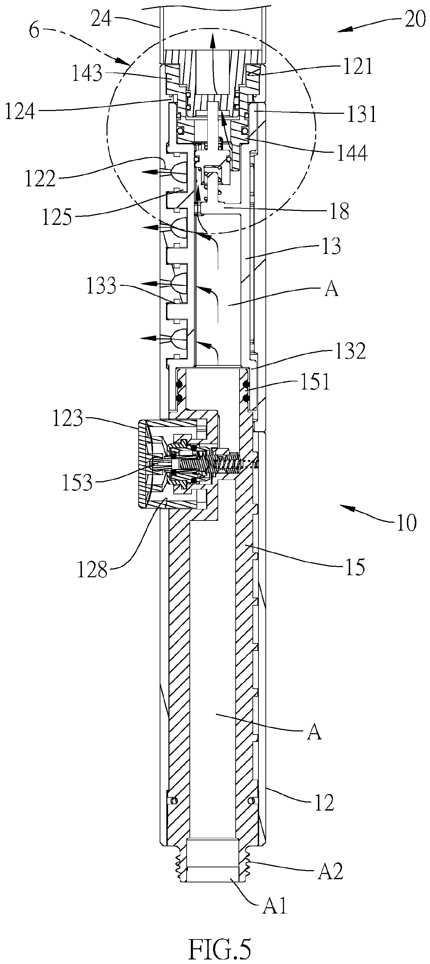

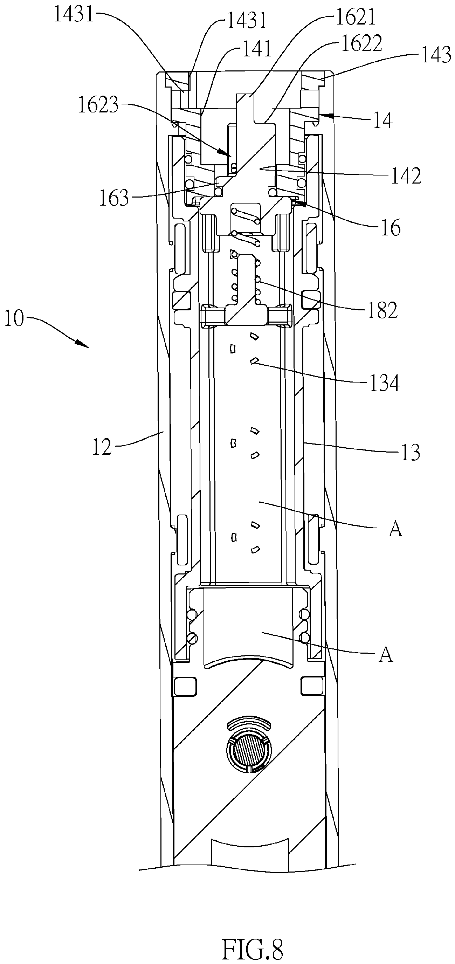

A circumference of the plugging portion 163 is embedded with a sealing ring 1631, wherein the sealing ring 1631 is adapted to be inserted into the plug hole section 142 of the inserted hole 141 to block the plug hole section 142. As illustrated in FIG. 8, when the plug 16 is located in the first position, the plugging portion 163 is inserted into the plug hole section 142 to block the plug hole section 142. During a process of moving the plug 16 to the second position, the plug 16 is moved in a direction toward the spring seat 181, thereby allowing the plugging portion 163 to be disengaged from the plug hole section 142 of the inserted hole 141. As illustrated in FIG. 5 and FIG. 6, when the plug 16 is moved down to the second position, the plug hole section 142 of the inserted hole 141 is unblocked, so that the guiding grooves 1623 communicate with the plug hole section 142 of the inserted hole 141, thereby communicating the flow pathway A and the guiding hole 221 via the guiding grooves 1623. A sectional area of the guiding grooves 1623 is smaller than either a sectional area of the guiding hole 221 or a sectional area of the flow pathway A, so that the water flow passing through the guiding grooves 1623 to the shower column 20 is stable and constant, thereby preventing the water from splashing at the connecting site between the shower column 20 and the sprayhead 10 when the shower column 20 is detached from the sprayhead 10.

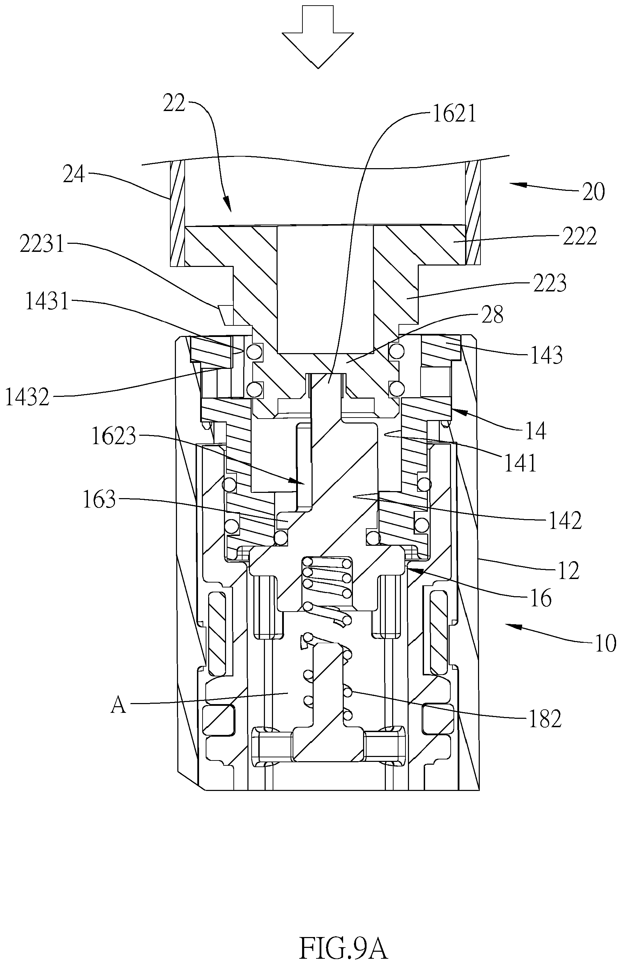

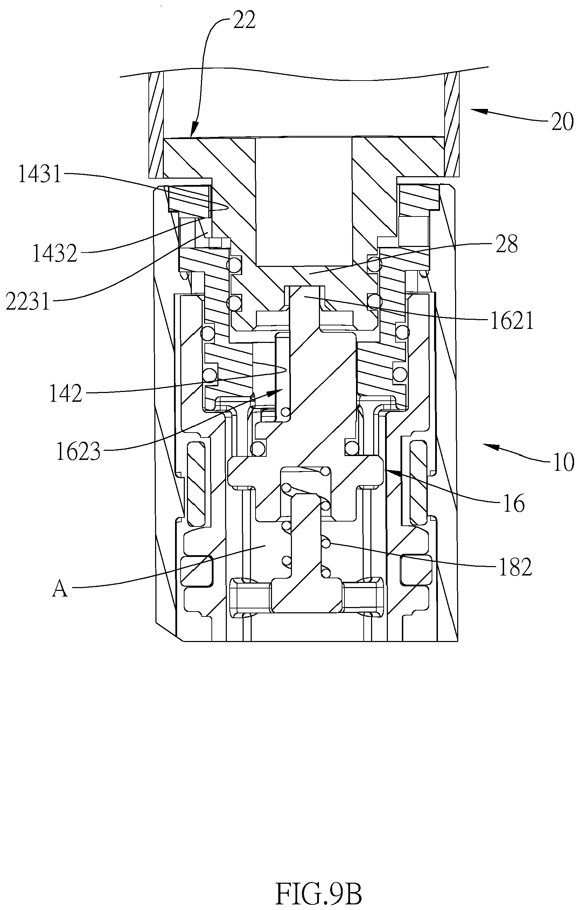

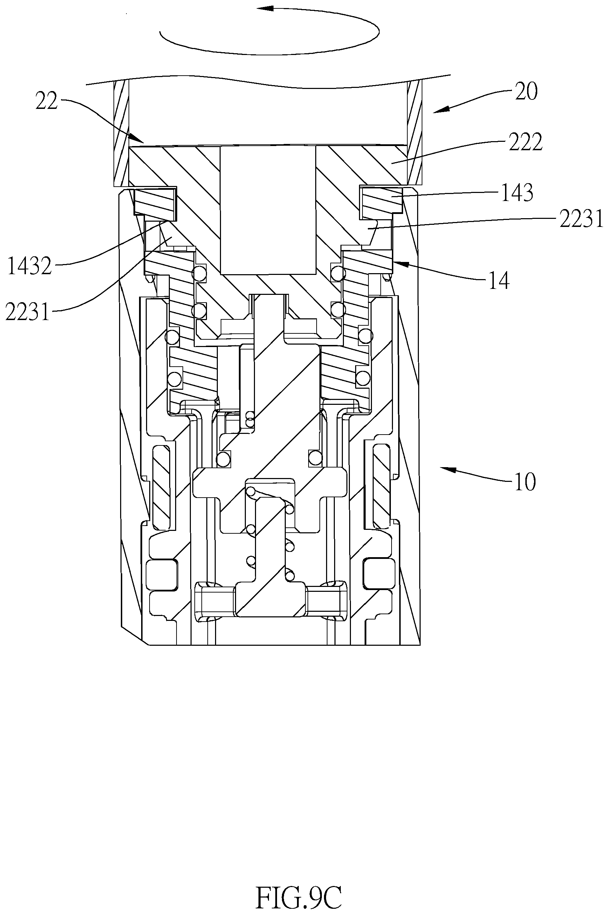

The quick-release connector 22 is a vertical tube body and is divided into an upper disc portion 222 and an inserting tube portion 223 along a top-bottom direction namely a direction from the connecting tube 24 to the tube body 12 of the sprayhead 10 . An outer diameter of the upper disc portion 222 is greater than an outer diameter of the inserting tube portion 223. The upper disc portion 222 is fixed and embedded into a bottom end of the connecting tube 24. The inserting tube portion 223 has an upper section and a lower section, wherein the upper section is located between the upper disc portion 222 and the lower section, and an outer diameter of the upper section of the inserting tube portion 223 is greater than an outer diameter of the lower section of the inserting tube portion 223. When the quick-release connector 22 is engaged with the quick-release seat 14, the inserting tube portion 223 is inserted into the inserted hole 141 of the quick-release seat 14. An circumference of the top section of the inserting tube portion 223 has two protruding hooks 2231 protruding away from the circumference of the inserting tube portion 223 and extending in opposite directions, wherein the two protruding hooks 2231 correspond to the two first grooves 1431 of the lower disc portion 143. In other embodiment, the number of the protruding hooks 2231 and the number of the first grooves 1431 are not limited to two, as long as the number of the protruding hooks 2231 corresponds to the number of the first grooves 1431. As illustrated in FIG. 9A to FIG. 9C, in the current embodiment, during a process of detachably engaging the quick-release connector 22 with the quick-release seat 14, each of the protruding hooks 2231 is inserted into one of the first grooves 1431 from the top and then is moved along the second groove 1432 to a closed end of the second groove 1432 to position, thereby allowing the upper disc portion 222 abuts against and is fixed to the lower disc portion 143.

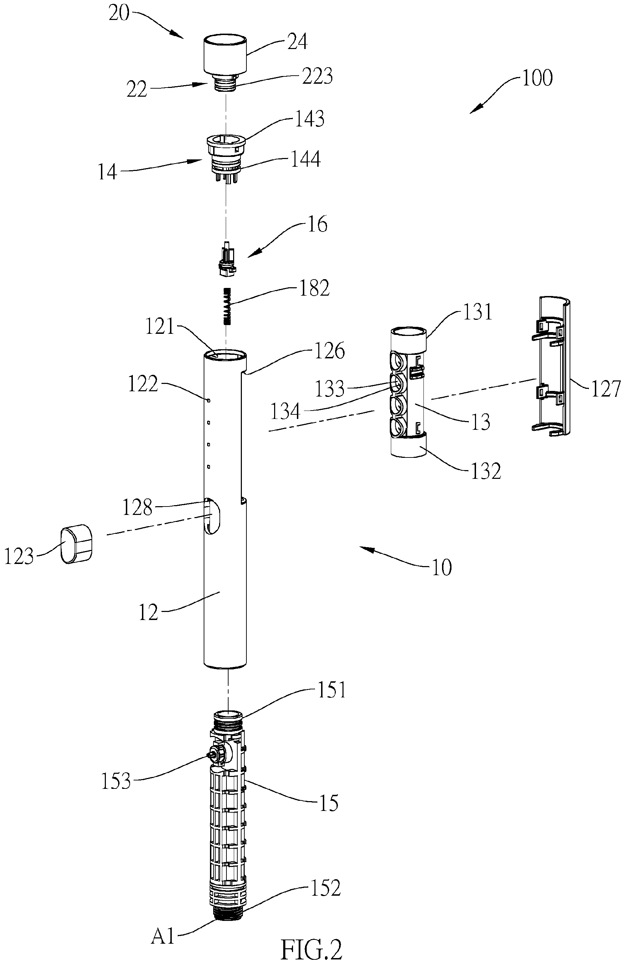

The following describes a structure of the sprayhead 10 of the above-mentioned embodiment in detail. As illustrated in FIG. 2 to FIG. 6, an interior of the tube body 12 is embedded with an upper flow channel 13 from top and a lower flow channel 15 from the bottom. A top end of the upper flow channel 13 has a top annular portion 131, and a bottom end of the upper flow channel 13 has a bottom annular portion 132. The tube portion 144 of the quick-release seat 14 is sealedly inserted into (namely tightly fitted into) the top annular portion 131 to position. A top end of the lower flow channel 15 has a connecting tube portion 151, wherein the connecting tube portion 151 is sealedly inserted into the bottom annular portion 132 to fix. A bottom end of the lower flow channel 15 has a threaded tube portion 152, wherein the threaded tube portion 152 protrudes away from a bottom end of the tube body 12, and the inlet A1 is located at a bottom end of the threaded tube portion 152. The flow pathway A is located in the upper flow channel 13 and the lower flow channel 15.

A front side of the tube body 12 includes the nozzles 122 that are spaced and arranged in the top-bottom direction, namely a direction from the mounted opening 121 to the inlet A1. The nozzles 122 are located in front of the upper flow channel 13. An inner wall of the front side of the tube body 12 includes a plurality of protruding tubes 125 that protrude inward from the inner wall. Each of the nozzles 122 communicates with one of the protruding tubes 125. A front side of the upper flow channel 13 is disposed with a plurality of grooves 133 that are spaced and arranged in the top-bottom direction. As illustrated in FIG. 8, each of the protruding tubes 125 is embedded into one of the grooves 133, wherein each of the grooves 133 communicates with the flow pathway A via an output aperture 134. In the current embodiment, the front side of the upper flow channel 13 is disposed with groups of three output apertures 134, wherein a position of each of the groups of three apertures corresponds to a position of one of the grooves 133, so that each of the grooves 133 communicates with the flow pathway A via one of the groups of the output apertures 134. As illustrated in FIG. 5 to FIG. 6, the support 18 is connected to an inner surface of the upper flow channel 13 and is located in the flow pathway A. The spring seat 181 has a central rod 183, and the spring 182 fits around the central rod 183. When the plug 16 is moved to the second position, a portion of the central rod 183 is received in the plug recess 1612.

A rear side of the tube body 12 has a receiving opening 126, wherein a position of the receiving opening 126 is behind the upper flow channel 13, that is to say the receiving opening 126 and the nozzles 122 face opposite directions. A size of the receiving opening 126 allows the upper flow channel 13 to pass through. The receiving opening 126 is detachably engaged with a back cover 127 to seal the receiving opening 126. A top portion of the lower flow channel 15 is disposed with a controlling valve 153. The front side of the tube body 12 has a recess 128 for receiving the control button 123. The recess 128 for receiving the control button 123 is aligned with the plurality of nozzles in the top-bottom direction. The control button 123 is a pressed button that could be received in the recess 128. The control button 123 is engaged with a front side of the controlling valve 153 by fitting.

As illustrated in FIG. 5 , in the current embodiment, the controlling valve 153 is a switch that is operated by pressing. Normally, the controlling valve 153 blocks the water flow flowing from the inlet A1 in the flow pathway A. When the controlling valve 153 is pressed, the flow pathway A is unblocked, thereby allowing the water flow to pass through the flow pathway A and flow to the nozzles 122. In other embodiment, the controlling valve 153 could be a valve for controlling the flow volume. The flow volume controlling valve could control a volume of water flow that could pass through the flow pathway A and flow to the nozzles 122. At this time, the control button 123 is a knob that is engaged with the flow volume controlling valve. In other embodiments, the controlling valve 153 and the control button 123 could be omitted from the sprayhead 10. Therefore, the function of the controlling valve 153 and the control button 123 is replaced by a controlling device for controlling the provision of the water resource. The controlling device could be a faucet, wherein the faucet could control the provision of the water flow that flows through the flow pathway A and outputs through nozzles 122.

It must be pointed out that the embodiment described above is only a preferred embodiment of the present invention. All equivalent structures which employ the concepts disclosed in this specification and the appended claims should fall within the scope of the present invention.

## Claims

1. A sprayhead assembly (100), comprising:
a sprayhead (10) comprising a tube body (12), a quick-release seat (14), and a plug (16), wherein an interior of the sprayhead (10) forms a flow pathway (A); the flow pathway (A) has an inlet (A1); a top end of the tube body (12) of the sprayhead (10) has a mounted opening (121); the tube body (12) of the sprayhead (10) is disposed with a plurality of nozzles (122) that communicates with the flow pathway (A); the quick-release seat (14) is embedded into the mounted opening (121), wherein an inserted hole (141) is formed in the middle of the quick-release seat (14), and the inserted hole (141) has a plug hole section (142); a portion of the plug (16) passes through the plug hole section (142); when the plug (16) is pushed, the plug (16) is returnably moved from the first position to the second position; when the plug (16) is located at the first position, the plug hole section (142) is blocked; when the plug (16) is located at the second position, the plug hole section (142) is unblocked; and
a shower column (20) comprising a quick-release connector (22), a connecting tube (24), and a top spray head (26), wherein the quick-release connector (22) is connected to a bottom end of the connecting tube (24), and the top spray head (26) is connected to a top end of the connecting tube (24); the quick-release connector (22) has a guiding hole (221); when the quick-release connector (22) is detachably engaged with the quick-release seat (14), the plug (16) is pushed and moved to the second position to allow the flow pathway (A), the plug hole section (142), and the guiding hole (221) to communicate with each other.

2. The sprayhead assembly (100) as claimed in claim 1, wherein the quick-release seat (14) is has a lower disc portion (143) and a tube portion (144); an inner surface of the lower disc portion (143) has a plurality of first grooves (1431), and each of the first grooves (1431) extends in a direction parallel to an axial direction of the quick-release seat (14); a bottom end of each of the first grooves (1431) is connected to a second groove (1432); the plug hole section (142) is located at a bottom end of the inserted hole (141); the quick-release connector (22) has an upper disc portion (222) and an inserting tube portion (223), wherein the inserting tube portion (223) is inserted into the inserted hole (141) of the quick-release seat (14); an circumference of the inserting tube portion (223) has a plurality of protruding hooks (2231); when the quick-release connector (22) is engaged with the quick-release seat (14), each of the plurality of protruding hooks (2231) is inserted into one of the plurality of first grooves (1431), and then the quick-release connector (22) is rotated to move the plurality of the protruding hooks (2231) into corresponding one of the second grooves (1432).

3. The sprayhead assembly (100) as claimed in claim 2, wherein the plug (16) comprises a bottom section (161), a top section (162), and a plugging portion (163), wherein the plugging portion (163) is connected between the bottom section (161) and the top section (162); a circumference of the plugging portion (163) is embedded with a sealing ring (1631); the plugging portion (163) is adapted to be inserted into the plug hole section (142) to block the plug hole section (142); when the plug (16) is located in the first position, the plugging portion (163) is inserted into the plug hole section (142) to block the inserted hole (141); when the plug (16) is moved to the second position, the plug (16) is moved out from the plug hole section (142) to unblock the inserted hole (141).

4. The sprayhead assembly (100) as claimed in claim 3, wherein an inner wall of the guiding hole (221) is connected to a pressing structure (28); a center of the top section (162) of the plug (16) is disposed with a supporting rod (1621); a center of the pressing structure (28) abuts against a top end of the supporting rod (1621).

5. The sprayhead assembly (100) as claimed in claim 4, wherein the flow pathway (A) is disposed with a support (18); the support (18) has a spring seat (181); the spring seat (181) is disposed with a spring (182); the spring (182) urge the plug (16) to move toward the first position; a bottom surface of the bottom section (161) has a plug recess (1612), and a top end of the spring (182) is inserted into and urges against the plug recess (1612); the spring seat (181) has a central rod (183), and the spring (182) fits around the central rod (183); when the plug (16) is moved to the second position, a portion of the central rod (183) is received in the plug recess (1612).

6. The sprayhead assembly (100) as claimed in claim 3, wherein the flow pathway (A) is disposed with a support (18); the support (18) has a spring seat (181); the spring seat (181) is disposed with a spring (182); the spring (182) urge the plug (16) to move toward the first position; a bottom surface of the bottom section (161) has a plug recess (1612), and a top end of the spring (182) is inserted into and urges against the plug recess (1612); the spring seat (181) has a central rod (183), and the spring (182) fits around the central rod (183); when the plug (16) is moved to the second position, a portion of the central rod (183) is received in the plug recess (1612).

7. The sprayhead assembly (100) as claimed in one of claims 1-6, wherein an interior of the tube body (12) of the sprayhead (10) is embedded with an upper flow channel (13) from the top and a lower flow channel (15) from the bottom; a top end of the upper flow channel (13) has a top annular portion (131), and a bottom end of the upper flow channel (13) has a bottom annular portion (132); a portion of the quick-release seat (14) is sealedly inserted into the top annular portion (131) to position, a top end of the lower flow channel (15) has a connecting tube portion (151), wherein the connecting tube portion (151) is sealedly inserted into the bottom annular portion (132) to fix. A bottom end of the lower flow channel (15) has a threaded tube portion (152), wherein the threaded tube portion (152) protrudes away from a bottom end of the tube body (12) of the sprayhead (10), and the inlet (A1) is located at a bottom end of the threaded tube portion (152); the flow pathway (A) is located in the upper flow channel (13) and the lower flow channel (15).

8. The sprayhead assembly (100) as claimed in claim 7, wherein a front side of the tube body (12) of the sprayhead (10) comprises a plurality of nozzles (122) that are spaced and arranged in a direction from the mounted opening (121) to the inlet (A1); the nozzles (122) are located in front of the upper flow channel (13); each of the nozzles (122) communicates with one of the protruding tubes (125); a front side of the upper flow channel (13) is disposed with a plurality of grooves (133) that are spaced and arranged the direction from the mounted opening (121) to the inlet (A1); each of the protruding tubes (125) is embedded into one of the grooves (133), wherein each of the grooves (133) communicates with the flow pathway (A) via an output aperture (134).

9. The sprayhead assembly (100) as claimed in claim 8, wherein the front side of the tube body (12) of the sprayhead (10) comprises a control button (123); the control button (123) controls a water output of the of each of the nozzles (122); the lower flow channel (15) is disposed with a controlling valve (153); the controlling valve (153) is adapted to control the flow volume of water flowing from the inlet (A1) through the flow pathway (A); the front side of the tube body (12) of the sprayhead (10) has a recess for receiving the control button (123); the control button (123) is received in the recess and is engaged with the controlling valve (153).

10. The sprayhead assembly (100) as claimed in claim 8, wherein a rear side of the tube body (12) of the sprayhead (10) has a receiving opening (126), wherein the receiving opening (126) is located behind the upper flow channel (13); a size of the receiving opening (126) is provide for the upper flow channel (13) to pass through; the opening is detachably engaged with a back cover (127) to seal the receiving opening (126).
